# EUROPÄISCHE PATENTANMELDUNG

(11) **EP 2 083 323 A1**
(43) Veröffentlichungstag der Anmeldung: **29.07.2009**
(21) Anmeldenummer: 09000811.1
(22) Anmeldetag: 21.01.2009
(51) Int. Cl.: G03B 21/62

(54) **Bildschirm-Emulsion**

(30) Priorität: 22.01.2008 DE 102008005598; 22.01.2008 DE 102008005596
(71) Anmelder: Lumin Visual Technologies AG, 85399 Halbergmoos (DE)
(72) Erfinder: Herfurtner, Wolfgang, 85416 Langenbach/Niederhummel (DE)
(74) Vertreter: Rothkopf, Ferdinand

(57) **Zusammenfassung**

Eine Bildschirm-Emulsion (18) zum Aufbringen an einer Bildschirm-Fläche (16) umfasst einem Anteil an Transparentlack und einem Anteil an transparenten Kunststoff-Kügelchen.

## Beschreibung

### Hintergrund der Erfindung

Die Erfindung betrifft eine Bildschirm-Emulsion zum Aufbringen an einer Bildschirm-Fläche, einen Projektionsbildschirm mit einer derartigen Bildschirm-Emulsion sowie ein Verfahren zum Aufbringen einer derartigen Bildschirm-Emulsion und schließlich auch die Verwendung einer derartigen Emulsion zum Ausbilden einer Beschichtung eines Bildschirms. Ferner betrifft die Erfindung einen Multitouch-Bildschirm bei dem eine Bildschirmebene vorgesehen ist, an der ein Benutzer des Multitouch-Bildschirms durch Berühren der Bildschirmebene so genannte Blobs bzw. Berührungs- oder Signalbereiche erzeugen kann, die von einer Auswerteeinrichtung erkannt und ausgewertet werden können.

Projektionsbildschirme der oben genannten Art werden in Kombination mit einem zugehörigen Projektor verwendet, um an dem Projektionsbildschirm ein von dem Projektor ausgestrahltes Bild optisch darzustellen. So ist beispielsweise aus JP 10 2004-007 0033 A ein Projektionsbildschirm mit einer optischen Faserschicht bekannt, welche eine Projektionsbildschirm-Fläche bildet. Die optische Faserschicht ist mit einem Beschichtungsmaterial beschichtet, auf der nachfolgend ein Schutzfilm aufgebracht ist.

Aus WO 03/054624 A1 ist ein Projektionsbildschirm für eine Bildprojektion bekannt, bei dem ein die Schirmgeometrie festlegender, transparenter Träger mit einer lichtstreuenden Schicht überdeckt ist. Die lichtstreuende Schicht ist als Beschichtung einer sehr dünnen, transparenten Folie ausgeführt. Die Folie ist an einem separatem Träger befestigt und gegenüber dem Träger optisch, vorzugsweise durch einen Luftspalt, gekoppelt.

Aus WO 02/057850 A1 ist ein Projektionsschirm aus einem Verbundglas bekannt, bei dem die Projektionsbildschirm-Fläche mittels wenigstens zweier miteinander über eine Kunststoffschicht verbundener Glasscheiben gestaltet ist. Die dem zugehörigen Projektor zugewandte Glasscheibe ist an ihrer Außenseite mit einer sich zumindest über den Projektionsbereich erstreckenden, transluzenten keramischen Beschichtung versehen.

Ziel der genannten Beschichtungen an Projektionsbildschirm-Flächen ist es, den Koronaeffekt zu reduzieren und ferner für eine Oberflächenrauhigkeit zu sorgen, welche zum einen eine (hinsichtlich Bildkontrast und Bildauflösung) optisch sehr ansprechende Bildwiedergabe ermöglicht und zum anderen zugleich Spiegelungen an der Projektionsbildschirmfläche vermeidet.

Multitouch-Bildschirme der oben genannten Art werden insbesondere verwendet, um an deren Bildschirmebene mehrere Berührungspunkte bzw. -bereiche zu erkennen und diese in Befehle umzuwandeln. Mit den Befehlen kann eine zugehörige rechnergesteuerte Anlage zu vorbestimmten Funktionen veranlasst werden. So können mittels eines Multitouch-Bildschirms beispielsweise Bilder und Videos bearbeitet und auch sonstige Funktionen ausgelöst werden, während man bisher im Wesentlichen nur eine Bedienung von rechnergesteuerten Anlagen mittels einzelner Berührpunkte, Tastatur oder Maus kennt.

Die dabei bisher verwendeten Techniken sind vielfältig und richten sich insbesondere auf TFT-Displays in Notebooks, an denen mittels optischer Sensoren mehrere Berührungspunkte erkannt und dann in Befehle umgewandelt werden können. Dabei ist es nicht zwingend erforderlich, dass der Benutzer des Multitouch-Bildschirms die Bildschirmebene direkt berührt, es reicht bereits aus, wenn dieser sich mit einem Finger oder einem anderen Gegenstand der Bildschirmebene nähert.

Bei einer bekannten Technik wird der Umstand genutzt, dass der Finger oder der sonstige Gegenstand Licht reflektiert und auf am Multitouch-Bildschirm vorgesehene Infrarot-Sensoren zurückwirft. Diese Infrarot-Sensoren werten die Lichtinformationen aus und wandeln sie in Befehle bzw. Informationen um.

Die Problematik derartiger Multitouch-Bildschirme, welche auch als Touchscreen-Bildschirme bezeichnet werden, liegt darin, dass die mit den Fingern oder sonstigen Gegenständen an der Bildschirmebene erzeugten Blobs mit großer Sicherheit und Wiederholbarkeit erkannt werden müssen, um eine wirklich zufriedenstellende Signalerzeugung zu gewährleisten. Bei den derzeit bekannten Bildschirmebenen von Multitouch-Bildschirmen ist dies nicht immer ausreichend gegeben.

### Zugrunde liegende Aufgabe

Der Erfindung liegt die Aufgabe zugrunde einen Bildschirm zu schaffen, der kostengünstig hergestellt werden kann und zugleich hervorragende Bildwiedergabequalität aufweist. Dabei soll die Herstellung der Bildschirme insbesondere auf einfache Weise derart anpassbar sein, dass Projektionsbildschirme für verschiedenste Applikationen hergestellt werden können. Ferner liegt der Erfindung die Aufgabe zugrunde, einen Multitouch-Bildschirm zu schaffen, bei dem eine sichere Erkennung der dort erzeugten Blobs gewährleistet ist und der dennoch vergleichsweise kostengünstig hergestellt werden kann. Insbesondere soll die Blob-Erkennung auch bei schwierigen und wechselnden Lichtverhältnissen am Multitouch-Bildschirm möglich sein.

### Erfindungsgemäße Lösung

Die Aufgabe ist erfindungsgemäß mit einer Bildschirm-Emulsion zum Aufbringen an einer Bildschirm-Fläche gelöst, welche einen Anteil an Transparentlack und einen Anteil an transparenten bzw. transluzenten Kunststoff-Kügelchen umfasst. Die erfindungsgemäße Kombination eines Transparentlacks mit darin eingebetteten Kunststoff-Kügelchen schafft eine Emulsion, welche überraschend einfach und kostengünstig an einer Bildschirm-Fläche aufgebracht werden kann, dort über die Lebensdauer es zugehörigen Bildschirms hinweg sicher haftet und darüber hinaus hervorragende optische Eigenschaften des Bildschirms gewährt.

Durch Anpassung des Mischungsverhältnisses und der einzelnen Komponenten der erfindungsgemäßen Bildschirm-Emulsion können für den herzustellenden Bildschirm die Parameter Lichttransmission, Lichtdispersion, Kontrast, Auflösung, Betrachtungswinkel, Mattigkeit der Oberfläche, Hot-Spot-Verhalten und Umgebungslichtempfindlichkeit eingestellt werden. Die Auflösung kann darüber hinaus insbesondere durch die Dicke der Schicht der erfindungsgemäßen Bildschirm-Emulsion eingestellt werden.

Dabei wird erfindungsgemäß unter anderem der Umstand genutzt, dass die in Transparentlack eingebetteten transparenten Kunststoff-Kügelchen gegenüber dem Transparentlack einen Brechungsindex-Unterschied aufweisen, der zu einer insgesamt besonders vorteilhaften Lichtbrechung in der erfindungsgemäß ausgebildeten Emulsionsschicht führt.

Der erfindungsgemäße Transparentlack ist gemäß einer ersten Ausführungsform der erfindungsgemäßen Bildschirm-Emulsion bevorzugt mit einem Einkomponentenlack hergestellt. Der Einkomponentenlack weist dabei bevorzugt 2,5 bis 10 % N-Methyl-2-pyrrolidon und/oder kleiner gleich 2,5 % 2-(2-Butoxy-ethoxy)ethanol auf. Die Dichte des erfindungsgemäß verwendeten Einkomponentenlacks ist vorteilhaft bei 20 °C zwischen 1,05 und 1,1 g/cm³, insbesondere 1,076 g/cm³ (nach DIN 53217). Die kinematische Viskosität ist vorteilhaft bei 20 °C zwischen 70 und 75 s, insbesondere 72 s (nach DIN 53211/4). Der Lösemittelgehalt ist vorteilhaft zwischen 6,5 und 6,7 % organische Löschungsmittel, insbesondere 6,6 % organische Lösemittel und/oder zwischen 34,1 und 34,5 % Wasser, insbesondere 34,3 % Wasser.

Alternativ ist der erfindungsgemäß genutzte Transparentlack mit einem Zweikomponentenlack hergestellt. Der Zweikomponentenlack weist vorteilhaft eine Lackkomponente mit 2,5 bis 10 % N-Methyl-2-pyrrolidon auf und 2,5 bis 10 % 2-Buthoxy-ethylacetat. Die Dichte bei 20 °C dieser Lackkomponente ist vorteilhaft zwischen 1,140 und 1,185 g/cm³, insbesondere 1,162 g/cm³ (nach DIN 53217). Die dynamische Viskosität dieser Lackkomponente ist vorteilhaft bei 20 °C zwischen 3400 und 3600 mPas, insbesondere 3500 mPas. Der Lösemittelgehalt an organischen Lösemitteln ist vorteilhaft zwischen 7,2 und 7,6 %, insbesondere 7,4 %. Der Lösemittelgehalt an Wasser ist vorteilhaft zwischen 36,9 und 37,3 %, insbesondere 37,1 %. Die Härtekomponente des Zweikomponentenlacks weist als Inhaltsstoffe insbesondere zwischen 50 und 100 % Aliphatic polyisocyanate homopolymer auf. Ferner können 2,5 bis 10 % 2-Buthoxi-ethylacetat und/oder kleiner gleich 2,5 % Hexamethylen-1,6-diisocyanat in der Härterkomponente enthalten sein. Die Dichte der Härterkomponente ist vorteilhaft bei 20 °C zwischen 1,110 und 1,150 g/cm³, insbesondere 1,131 g/cm³ (nach DIN 53217). Die kinematische Viskosität der Härterkomponente ist vorteilhaft bei 20 °C zwischen 220 und 230 s, insbesondere 210 s (nach DIN 53211/4). Der Lösemittelgehalt an organischen Lösemitteln ist vorteilhaft zwischen 9,0 und 9,2 %, insbesondere 9,1 %.

Mit den oben genannten Zusammensetzungen des erfindungsgemäß verwendeten Transparentlacks kann dieser besonders vorteilhaft mit den erfindungsgemäß verwendeten transparenten Kunststoff-Kügelchen vermischt und verarbeitet werden. Dabei ist der erfindungsgemäßen Bildschirm-Emulsion bevorzugt zusätzlich ein Entschäumer beigemengt. Dieser sorgt für eine überraschend gleichmäßige Verteilung der Kunststoff-Kügelchen in der Emulsion. Dadurch wird auch die Lichtstreuung verbessert. Ferner kann mit den derartigen Transparentlacken ein besonders vorteilhaftes Zusammenspiel der Brechungsindizes von Transparentlack und Kunststoff-Kügelchen erreicht werden.

Vorteilhaft ist der erfindungsgemäße Transparentlack ferner auf Wasserbasis hergestellt. Dies ermöglicht insbesondere, dass vor der Verarbeitung des Transparentlacks diesem weiteres Wasser zugegeben werden kann, um insbesondere die Viskosität des Transparentlacks und der gesamten Mischung aus Transparentlack und transparenten Kunststoff-Kügelchen für die Verarbeitung besonders vorteilhaft einzustellen.

Die erfindungsgemäß verwendeten Kunststoff-Kügelchen weisen besonders vorteilhaft eine mittlere Partikelgröße von 6 bis 15 Mikrometern auf. Ferner sind vorteilhaft maximal 0,2 % der Kügelchen bzw. Partikel größer als 30 Mikrometer. Mit größeren Kunststoff-Kügelchen ergibt sich eine strukturiertere Oberfläche des erfindungsgemäßen Bildschirms, was insbesondere bei besonders großflächigen Bildschirmen gewünscht sein kann.

Die spezifische Dichte der erfindungsgemäß verwendeten Kunststoff-Kügelchen liegt vorteilhaft zwischen 1,00 und 1,20 g/cm³, insbesondere bei 1,11 g/cm³. Bei einer anderen Variante der erfindungsgemäßen Kunststoff-Kügelchen liegt deren Dichte vorteilhaft bei 20 °C zwischen 1,15 und 1,19 g/cm3, insbesondere bei 1,17 g/cm³, mit einer Stampfdichte zwischen 550 und 700 kg m³, insbesondere 650 g/cm³ (nach DIN 53194).

Vorteilhaft sind die Kunststoff-Kügelchen ferner aus PMMA (Polymethylmetacrylat - chemische Formel: (C₅H₈O₂)ₓ) hergestellt. Die Kunststoff-Kügelchen sind dabei vorteilhaft nicht eingefärbt. Die Kunststoff-Kügelchen sind insbesondere bei 20 °C in Wasser unlöslich.

Der Gewichtsprozentanteil der Kunststoff-Kügelchen beträgt in der Bildschirm-Emulsion bevorzugt zwischen 15 und 55 %, insbesondere zwischen 38 und 48 %. Die kinematische Viskosität bei 20 °C der erfindungsgemäßen Bildschirm-Emulsion ist vorteilhaft auf zwischen 30 und 100 s eingestellt. Zur Einstellung der Viskosität kann der erfindungsgemäßen Bildschirm-Emulsion insbesondere vorteilhaft Wasser beigefügt werden, nämlich dann wenn auch der Transparentlack, wie oben erläutert auf Wasserbasis herstellt ist. Durch Beimischung einer großen Menge an Kunststoff-Kügelchen ergibt sich eine vergleichsweise zähe Bildschirm-Emulsion, die in relativ großen einzelnen Schichtdicken auf die zugehörige Bildschirmfläche aufgebracht werden kann. Auf diese Weise können die Herstellungszeiten und damit auch -kosten des erfindungsgemäßen Bildschirms gering gehalten werden. Alternativ können weniger Kunststoff-Kügelchen bzw. Partikeln der Bildschirm-Emulsion beigesetzt werden, wobei dann vorteilhaft mehrere, vergleichsweise dünne einzelne Schichten an Bildschirm-Emulsion auf die zugehörige Bildschirm-Fläche aufgebracht werden. Die derart übereinander gelagerten Schichten an Bildschirm-Emulsion führen zu einer besonders gleichmäßig ausgestalteten Gesamtschicht an Bildschirm-Emulsion und damit zu besonders guten optischen Eigenschaften. Durch die Zugabe von Kunststoff-Kügelchen und durch die Gesamtschichtdicke werden insbesondere die Parameter Lichttransmission und Lichtstreuung beeinflusst. Ziel ist eine hohe Lichttransmission bei gleichzeitig hoher Lichtstreuung. Je höher der Partikelanteil und je dicker die Gesamtschicht, umso mehr Lichtstreuung kann erzielt werden, umso geringer ist aber auch die Lichttransmission. Mehr Lichtstreuung bringt auch weniger Auflösung mit sich.

Um diese optischen Eigenschaften weiter zu verbessern, sind bei der erfindungsgemäßen Bildschirm-Emulsion ferner vorteilhaft Kontrastpartikel, insbesondere Flammruß, mit einem Gewichtsprozentanteil von bis zu 5 %, insbesondere 0,05 bis 0,50 % beigemengt.

Die erfindungsgemäße Aufgabe ist ferner mit einem Produktionsbildschirm mit einer Bildschirm-Emulsion gemäß der oben genannten erfindungsgemäßen Art gelöst.

Ferner ist die Aufgabe mit einem Verfahren zum Aufbringen einer Bildschirm-Emulsion auf einer Bildschirm-Fläche, insbesondere einer Projektionsbildschirm-Fläche, gelöst, bei dem die Bildschirm-Emulsion als mindestens eine Schicht auf dem Bildschirm im Sprühverfahren aufgebracht wird. Das Sprühverfahren ist insbesondere bei gekrümmten Bildschirm-Flächen ideal. Das derartige erfindungsgemäße Aufsprühen einer Bildschirm-Emulsion auf der Projektionsfläche eines zugehörigen Bildschirms kann vorteilhaft mittels einer Sprühpistole manuell oder durch einen Roboter ausgeführt werden. Das Verfahren führt, insbesondere im Kombination mit der oben erläuterten erfindungsgemäßen Bildschirm-Emulsion zu einem Bildschirm für eine Front- und/oder Rückprojektion, der hervorragende optische Eigenschaften aufweist, besonders großflächig gestaltet sein kann und dessen Bildschirm-Fläche zugleich hinsichtlich ihres Gewichtes besonders leicht gestaltet sein kann. Ferner weist die mit dem derartigen Verfahren aufgebrachte Bildschirm-Emulsion hervorragende Kratzbeständigkeit auf. Durch Aufbringen eines kratzfesten Transparentlacks oder einer transparenten Beschichtung kann neben der Kratzfestigkeit auch die Haptik weiter verbessert werden. Das Verfahren wird insbesondere vorteilhaft zum Aufbringen einer Bildschirm-Emulsion an einer transparenten und/oder halblichtdurchlässigen Fläche verwandt. Die Fläche ist bevorzugt mittels eines gespannten Flächenmaterials, insbesondere eines Gewebes oder Netzes gebildet, das in einem Rahmen eingespannt ist. Das Gewebe ist besonders bevorzugt monofil gestaltet. Alternativ ist die Fläche aus PMMA, Polycarbonat, einfachem Glas, entspiegeltem Glas oder Sicherheitsglas gestaltet. Eine derartige Bildschirm-Fläche wird vorteilhaft für eine Rückprojektion verwandt. Für eine Front- oder Aufprojektion wird vorteilhaft eine nichttransparente Bildschirm-Fläche als Grundlage zum Aufbringen der Bildschirm-Emulsion genutzt.

Bei dem erfindungsgemäßen Verfahren wird besonders bevorzugt die Bildschirm-Emulsion in bis zu 20 Schichten aufgebracht, insbesondere vorteilhaft in 1 bis 3 Schichten aufgebracht.

Bei einem derartigen geschichteten Aufbringen der erfindungsgemäßen Bildschirm-Emulsion werden die einzelnen Schichten vorteilhaft im so genannten Rauteverfahren aufgebracht. Dies bedeutet, dass die Richtung der parallelen Verfahrwege zum Aufbringen einer ersten Schicht mittels einer Sprühpistole zur Richtung der parallelen Verfahrwege zum Aufbringen einer zweiten Schicht in einem Winkel von zwischen 30 und 60 °, insbesondere 45 °, zueinander verschwenkt sind. Das derartige Rauteverfahren führt zu einer homogenen Gesamtschicht der erfindungsgemäßen Bildschirm-Emulsion.

Alternativ oder auch zusätzlich ist die erfindungsgemäße Aufgabe mit einem Verfahren zum Aufbringen einer erfindungsgemäßen Bildschirm-Emulsion auf einer Bildschirm-Fläche gelöst, bei dem die Bildschirm-Emulsion als eine Schicht auf der Bildschirm-Fläche im Siebdruckverfahren aufgebracht wird. Mit dem derartigen Verfahren kann ebenfalls eine besonders homogen und optisch vorteilhafte Bildschirm-Emulsions-Schicht hergestellt werden. Ferner können in einem Siebdruckverfahren verschiedene Formen der Schicht ausgebildet werden, so dass besondere optische Effekte und Eindrücke erzielt werden können, bei denen die Bildschirm-Fläche nur teilweise mit einer Bildschirm-Emulsion überdeckt ist.

Ein weiteres vorteilhaftes Aufbringungsverfahren für die erfindungsgemäße Bildschirm-Emulsion ist das Beschichten in einer Beschichtungsanlage, wie sie für Beschichtungen von optischen Folien für Siebdruckanwendungen verwendet werden. Dabei wird im so genannten Pre Coated Foil-Verfahren (PCF) eine dünne Folie beschichtet, die nachfolgend auf PMMA oder ein anderes transparentes Material aufgeklebt wird. Das Aufkleben erfolgt insbesondere durch Laminieren mit einem transparenten Folienkleber.

Bei dem erfindungsgemäßen Verfahren ist vorteilhaft die Schicht von Bildschirm-Emulsion mit einem Leuchtdichtefaktor von 0,5 bis 5,0, insbesondere 1,0 ausgebildet. Zur Beeinflussung des Leuchtdichtefaktors wird dabei insbesondere der Anteil an Kunststoff-Kügelchen in der Bildschirm-Emulsion und/oder die Schichtdicke der Bildschirm-Emulsion auf der Bildschirm-Fläche verändert. Der Leuchtdichtefaktor (nach DIN 19045), der auch als Gain bezeichnet wird, beschreibt die Leuchtdichte eines Bildschirms. Er gibt das Verhältnis der gemessenen Leuchtdichte im Vergleich zu einem normal angenommenen Wert (bei einer mattweiß, diffusen Magnesium-Karbonat-Oberfläche) an. Der Leuchtdichtefaktor gibt also an, um wie viel ein Bildschirm heller erscheint, als eine mattweiße, diffuse Oberfläche.

Aus den bereits oben erläuterten Gründen wird bei dem erfindungsgemäßen Verfahren die Bildschirm-Emulsion vorteilhaft mittels eines Transparentlacks auf Wasserbasis herstellt und vor dem Aufbringen der Schicht der Bildschirm-Emulsion auf die Bildschirm-Fläche der Bildschirm-Emulsion zusätzlich Wasser zugefügt. Auf diese Weise wird insbesondere die Viskosität der Bildschirm-Emulsion auf einen gewünschten Wert eingestellt. Die Bildschirm-Fläche wird ferner bevorzugt vor dem Aufbringen der Schicht von Bildschirm-Emulsion entfettet bzw. gereinigt. Dieses Entfettet verbessert insbesondere die Haftung der Bildschirm-Emulsion an der Bildschirmfläche und damit deren Kratzbeständigkeit. Ferner werden mit dem Entfetten und Reinigen Einschlüsse in der Bildschirm-Emulsions-Schicht vermieden. Das Entfetten ist besonders in jenem Fall ein vorteilhafter Verfahrensschritt, bei dem als Bildschirm-Fläche ein gespanntes, insbesondere monofiles Gewebe verwendet wird.

Entsprechend ist die erfindungsgemäße Lösung ferner durch Verwendung der genannten Emulsionen zum Ausbilden einer Beschichtung an einer Bildschirm-Fläche, insbesondere einer Projektionsbildschirm-Fläche, gelöst.

Die erfindungsgemäße Aufgabe ist ferner vorteilhaft mit einem Multitouch-Bildschirm gelöst, bei dem eine Bildschirmebene vorgesehen ist, an der ein Benutzer des Multitouch-Bildschirms durch Berühren der Bildschirmebene Blobs erzeugen kann, die von einer Auswerteeinrichtung erkannt und ausgewertet werden können, und bei dem die Bildschirmebene mit einer Emulsion, insbesondere der oben genannten Art, beschichtet ist.

Mit der genannten Emulsion kann an der Bildschirmebenen des Multitouch-Bildschirms eine Oberfläche erzeugt werden, welche insbesondere im Hinblick auf die erforderlichen optischen Eigenschaften der Bildschirmebene für eine gut zu erkennende Projektion und zugleich eine sichere Blob-Erkennung, insbesondere mittels Infrarotlicht, sorgt. Als Grundlage für das Aufbringen der erfindungsgemäßen Emulsion wird dabei bevorzugt mit transparentem oder semitransparentem Trägermaterial bzw. Flächenmaterial gearbeitet, an dem eine Rückprojektion, also eine Projektion an der vom Benutzer abgewandten Seite der Benutzerebene, erfolgt. An dieser vom Benutzer abgewandten Seite sind an dem derartigen Multitouch-Bildschirm vorteilhaft sowohl eine Kamera als auch eine zusätzliche Infrarotbeleuchtung vorgesehen.

Zum Erkennen und Auswerten der Blobs ist bei dem erfindungsgemäßen Multitouch-Bildschirm daher vorteilhaft, die Auswerteeinrichtung mit einer Kamera zum Erkennen eines Helligkeitsunterschieds an der Bildschirmebene versehen. Die Kamera und die zugehörige restliche Auswerteeinrichtung sind ferner insbesondere dazu eingerichtet, bei der Auswertung auch Veränderungen der Lichtsituation auf Grund einer Auslenkung des gespannten Flächenmaterials zu berücksichtigen. Die Auswerteeinrichtung ist ferner vorteilhaft dazu eingerichtet in Abhängigkeit der Stärke eines Andrucks an der Bildschirm-Fläche eine veränderte Steuerfunktion zu erzeugen. Ein Andruckabhängige bzw. Intensitätsabhängige Steuerwirkung ist insbesondere für das Verwenden des erfindungsgemäßen Multitouch-Bildschirms als Tastatur und/oder als Spielekonsole von Bedeutung.

Mit der erfindungsgemäßen Emulsion ist es ferner möglich, die Bildschirmebene des Multitouch-Bildschirms derart dünn und/oder derart durchsichtig bzw. transluzent zu gestalten, dass durch diese hindurch eine Fingerabdruck-Erkennung möglich ist. Auf diese Weise kann an dem erfindungsgemäßen Multitouch-Bildschirm insbesondere in dessen Auswerteeinrichtung beispielsweise eine Zugangskontrolle zu einem angeschlossenen technischen System realisiert werden.

Auch ist es an dem erfindungsgemäßen Multitouch-Bildschirm mit dessen Emulsion möglich, eine einzelne Hand eines Benutzers in deren Teilbereichen zu erkennen. So können einzelnen Fingern einer Hand eines Benutzers unterschiedliche Wirkungen zugewiesen werden. Es kann auch eine unterschiedliche Handstellung genutzt werden, um mit Hilfe der Auswerteeinrichtung daraus unterschiedliche Signale abzuleiten.

Die Kamera ist vorteilhaft sensitiv für Infrarotlicht gestalt und es ist ferner bevorzugt insbesondere eine Infrarotbeleuchtung für die Bildschirmebene vorgesehen. Die Infrarotbeleuchtung strahlt bevorzugt diffus, wobei insbesondere Infrarotstrahler mit einer davor angeordneten Lichtstreufolie für eine gleichmäßige, diffuse Ausleuchtung der Bildschirmebene vorgesehen sind. Alternativ kann für das Erkennen und Auswerten der sich an der Bildschirmebene ergebenden Blobs vorteilhaft auch der Infrarotanteil von vorhandenem Tageslicht erfindungsgemäß genutzt werden. Die erfindungsgemäße Auswerteeinrichtung ist ferner vorteilhaft dazu angepasst, anhand der Höhe des Infrarotlichtanteils an der Kamera im einfallenden Licht den Tageslichteinfluss zu ermitteln und diesen durch geeignete Berechnungsverfahren zu kompensieren. Auf diese Weise ist es möglich, den erfindungsgemäßen Multitouch-Bildschirm vom Tageslichteinfluss nahezu unabhängig zu nutzen. Vorteilhaft ist es ferner, die erfindungsgemäß verwendete Kamera mit einem Infrarotlichtfilter auszustatten. Dieser Infrarotlichtfilter lässt vorteilhaft nur Licht der Wellenlänge von 875 bis 885 nm insbesondere 880 nm durch. So kann ebenfalls der Einfluss des Infrarotlichtanteils im Tageslicht und auch im Kunstlicht minimiert werden.

Ferner ist die erfindungsgemäße Auswerteeinrichtung vorteilhaft mit einer Filtervorrichtung zum Ausfiltern von Fremdeinflüssen auf die Blob-Erkennung versehen. Derartige Filtervorrichtungen sehen insbesondere ein Umwandeln eines mit der Kamera aufgenommenen Farbbildes in ein Graustufenbild vor, einen Hochpass-Filter, eine Skalierung und/oder eine Lagebereinigung. Ferner ist es mit einer derartigen Filtervorrichtung vorteilhaft möglich, dass auf die Bildschirmebene projizierte Bild zu "subtrahieren". Eine derartige Hintergrundsubtraktion ist möglich, da an dem erfindungsgemäßen Multitouch-Bildschirm von dessen zugeordnetem Projektor grundsätzlich bekannt ist, welches Bild jeweils gerade auf dessen Bildschirmebene projiziert wird. Das entsprechend zugeordnete, von der Kamera aufgenommene Bild kann dann mit diesem projizierten Bild verrechnet werden, wodurch sich mit dieser "Subtraktion" eine besonders sichere Blob-Erkennung ergibt.

Die Auswerteeinrichtung des erfindungsgemäßen Multitouch-Bildschirms ist ferner vorteilhaft dazu eingerichtet, einem erkannten Blob eine eindeutige Kennung und/oder einer Richtung und/oder eine von mehreren vordefinierten Arten zuzuordnen. Anhand der Kennung, der Richtung und der vordefinierte Art eines Blobs können dann entsprechende Signale an eine zugehörige Rechnergesteuerte Anlage weitergegeben werden.

Darüber hinaus ist die Auswerteeinrichtung vorteilhaft dazu eingerichtet, die Lage eines erkannten Blobs in mindestens eine auf die Bildschirmebene bezogene Koordinate umzurechnen. Die dadurch ermittelten Koordinaten bilden vorteilhaft die Grundlage für die spätere, oben erläuterte Signalerzeugung.

Um eine echte Multitouch-Funktion des erfindungsgemäßen Multitouch-Bildschirms zu gewährleisten, ist es ferner vorteilhaft, mehrere zeitgleich erkannte Blobs zu einem Paket zusammen zu fassen und einer dieses Paket weiter verarbeitenden Einrichtung bereitzustellen.

Die Emulsion am Multitouch-Bildschirm weist insbesondere bevorzugt eine Schichtdicke von 5 µm bis 500 µm, insbesondere 150 µm auf. Vor einem Aufbringen der Emulsion, welches besonders bevorzugt im Sprühverfahren oder alternativ mittels Beschichtungsrinnen oder einem Siebdruckverfahren erfolgt, wird die Bildschirmebene vorteilhaft entfettet und gereinigt. Bei einem Aufsprühen der erfindungsgemäß verwendeten Emulsion wird diese besonders bevorzugt im Rauteverfahren, d.h. mittels mehrerer Sprühvorgänge aufgetragen, deren Bewegungsrichtungen beim Aufbringen zueinander in einem Winkel zwischen 30 und 60 °, insbesondere 45 ° versetzt sind. Die erfindungsgemäß aufgebrachte Emulsion ist vorteilhaft aus einem Anteil an Transparentlack und einem Anteil an transparenten Kunststoff-Kügelchen gebildet. Die Kunststoff-Kügelchen weisen dabei bevorzugt eine mittlere Partikelgröße von 6 µm bis 15 µm auf und sind besonders bevorzugt aus PMMA (Polymethylmethacrylat, (C₅H₈O₂)ₓ) hergestellt. Darüber hinaus ist die Emulsion vorteilhaft zusätzlich mit Kontrastpartikeln versetzt, insbesondere Flammruß mit einem Gewichtsprozentanteil von bis zu 5 % insbesondere 0,05 % bis 0,50 %. Der Gewichtsprozentanteil von Kunststoff-Kügelchen in der Emulsion beträgt bevorzugt 15 bis 55 %, insbesondere 38 % bis 48 %, am bevorzugtesten 44 %. Die Emulsion wird besonders Bevorzugt mit einer kinematischen Viskosität von 30 bis 100 s (nach DIN 53211/4) verarbeitet. Besonders bevorzugt wird dabei zur Viskositätsanpassung ein Transparentlack auf Wasserbasis verwendet, dem bedarfsabhängig Wasser zugesetzt wird. Die Emulsion wird vorteilhaft in mehreren Schichten, insbesondere bis zu 20 Schichten, besonders bevorzugt 3 Schichten, aufgebracht, so dass insgesamt eine sich ergebende, besonders gleichmäßige Schichtdicke erreicht werden kann.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine perspektivische Ansicht eines erfindungsgemäßen Projektionsbild-schirms,
- Fig. 2: zeigt das Detail II in Fig. 1,
- Fig. 3: ein Ablaufdiagramm eines erfindungsgemäßen Verfahrens zum Aufbringen einer Projektionsbildschirm-Emulsion auf einer Projektionsbildschirm-Fläche,
- Fig. 4: eine perspektivische Ansicht einer ersten Ausführungsvariante eines erfindungsgemäßen Multitouch-Bildschirms,
- Fig. 5: eine perspektivische Ansicht einer zweiten Ausführungsvariante eines erfindungsgemäßen Multitouch-Bildschirms,
- Fig. 6: das Detail VI in Fig. 4 und 5,
- Fig. 7: ein erstes an einem Multitouch-Bildschirm gemäß Fig. 4 oder 5 erkanntes Blob-Bild und
- Fig. 8: ein zweites an einem Multitouch-Bildschirm gemäß Fig. 4 oder 5 erkanntes Blob-Bild..

### Detaillierte Beschreibung der Ausführungsbeispiele

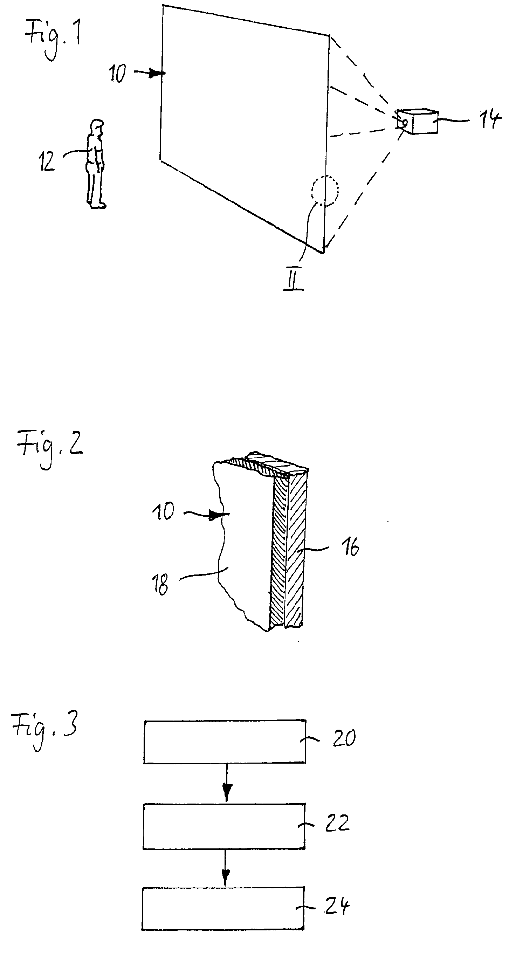

In Fig. 1 ist ein Projektionsbildschirm 10 veranschaulicht, der auf seiner Vorderseite von einem Benutzer 12 betrachtet wird, während er rückseitig von einem Projektor 14 angestrahlt wird.

Der Projektionsbildschirm 10 ist (siehe Fig. 2) mit einer Projektionsbildschirm-Fläche 16 gestaltet, auf die der Benutzer 12 sieht. Die Projektionsbildschirm-Fläche 16 ist mit einem gespannten Flächenmaterial gestaltet. Dieses ist aus einem monofilen Polyethylen-Gewebe gebildet, wie es auch auf Siebdruckapplikationen verwendet wird. Das monofile Polyethylen-Gewebe ist in einem (nicht näher veranschaulichten) Rahmen eingespannt. Bei einer (nicht dargestellten) Variante ist die Projektionsbildschirm-Fläche 16 mit einer PMMA-Platte gestaltet, die als solche Eigensteifigkeit aufweist.

Auf der dem Benutzer 12 zugewandeten Seite der Projektionsbildschirm-Fläche 16, also auf der Vorderseite des Projektionsbildschirms 10, ist auf die Projektionsbildschirm-Fläche 16 eine Projektionsbildschirm-Emulsion 18 schichtförmig aufgesprüht. Auf der Rückseite kann zusätzlich eine dünne Schicht einer Projektionsbildschirm-Emulsion aufgebracht sein, mittels der insbesondere bei Einsatz eines Umlenkspiegels, eine direkte Rückreflektion des projizierten Lichts vom Bildschirm auf den Umlenkspiegel verhindert wird (sogenannte Doppelbilder).

Die Projektionsbildschirm-Emulsion 18 ist mit einem Anteil eines Transparentlacks und einem Anteil transparenter bzw. transluzenter Kunststoff-Kügelchen gebildet. Die Kunststoff-Kügelchen weisen eine mittlere Partikelgröße von 6 bis 15 Mikrometern auf und sind aus transparentem Polymethylmethacrylat hergestellt. Der Gewichtsprozentanteil der Kunststoff-Kügelchen beträgt innerhalb der Projektionsbildschirm-Emulsion 18 ca. 44 %. Ferner enthält die Projektionsbildschirm-Emulsion als Kontrastmittel Flammruß mit einem Gewichtsprozentanteil von ca. 0,25 %.

Die Projektionsbildschirm-Emulsion 18 ist auf die Projektionsbildschirm-Fläche 16 mittels eines Sprühverfahrens aufgebracht worden. Das Sprühverfahren umfasst einen Schritt 20 eines Bereitstellens der Projektionsbildschirm-Fläche 16 ohne Projektionsbildschirm-Emulsion 18 in einem (nicht dargestellten) Reinraum, einen Schritt 22 eines Entfettens und Reinigens der Projektionsbildschirm-Fläche 16 sowie einen Schritt 24 eines Aufsprühens der Projektionsbildschirm-Emulsion 18 in vorliegenden drei Schichten, wobei diese Schichten nacheinander, einzeln im Rauteverfahren mittels einer (nicht dargestellten) Sprühpistole von einem Roboter aufgesprüht werden. Die Projektionsbildschirm-Emulsion 18 weist derart aufgebracht bevorzugt insgesamt eine Schichtdicke von 5 µm bis 500 µm, insbesondere 150 µm auf.

Vor dem Aufsprühen 24 ist die Projektionsbildschirm-Emulsion 18 durch Vermischen eines Einkomponentenlacks auf Wasserbasis mit den als Schüttgut bereitgestellten Kunststoff-Kügelchen vorbereitet worden. Zum Einstellen einer vorbestimmten Viskosität der Projektionsbildschirm-Emulsion 18 wurde dieser eine angemessene Menge Wasser beigefügt, so dass sich eine Gesamtviskosität der Projektionsbildschirm-Emulsion 18 von ca. 55 s ergibt.

Auf diese Weise ist die Gesamtschicht der Projektionsbildschirm-Emulsion 18 mit einem Leuchtdichtefaktor von ca. 1,0 ausgebildet.

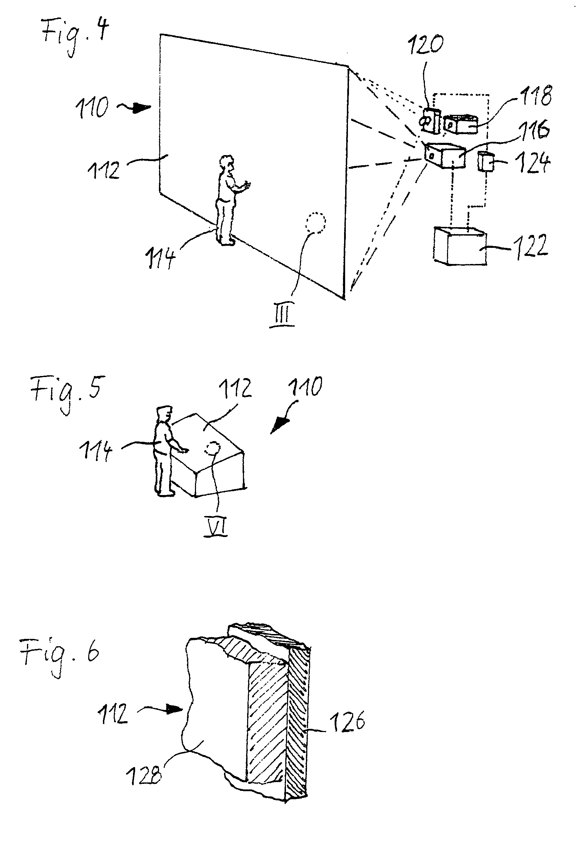

In Fig. 4 ist eine Ausführungsvariante eines Multitouch-Bildschirms 110 dargestellt, der eine im Wesentlichen senkrecht angeordnete Bildschirmebene 112 mit einer Dimension von zirka 4 m auf 8 m aufweist. Die Bildschirmebene 112 weist eine einem Benutzer 114 zugewandte Vorderseite und eine vom Benutzer abgewandte Rückseite auf. Die dem Benutzer 114 abgewandet Rückseite wird von einem Projektor 116 sowie einer Infrarotbeleuchtung 118 vollflächig diffus beleuchtet. Der Projektor 116 projiziert ein jeweils gewünschtes Bild auf die Rückseite der Bildschirmebene 112. Die Infrarotbeleuchtung 118 dient zum diffusen Beleuchten der Rückseite des Bildschirms 112 mit Infrarotlicht und weist dazu je einen (nicht näher dargestellten) Diffusor in Form einer Streufolie vor mehreren zugehörigen Leuchten auf.

An der Rückseite der Bildschirmebene 112 befindet sich ferner eine Kamera 120, welche mit einem nicht (dargestellten Infrarotlichtfilter) versehen ist. Die Kamera 20 ist derart angepasst und angeordnet, dass sie die gesamte Fläche der Rückseite der Bildschirmebene 112 erkennen kann. Der Projektor 116, die Infrarotbeleuchtung 118 und die Kamera 120 sind an eine Rechneranlage 122 angeschlossen, wobei zwischen der Kamera 120 und der Rechneranlage 122 eine Auswerteeinrichtung 124 zwischengeschaltet ist, welche bei einer (weiter nicht veranschaulichten) Ausführungsvariante in die Rechneranlage 122 integriert ist.

Die Auswerteeinrichtung 124 ist dazu eingerichtet, Blobs zu erkennen und auszuwerten, welche in einem von der Kamera 120 aufgenommenen Kamerabild zu ermitteln sind. Die Blobs entstehen dadurch, dass der Benutzer 114 seine Hand oder einen anderen Gegenstand gegen die Bildschirmebene 112 bewegt und dadurch an dieser bereichsweise eine veränderte Lichtsituation erzeugt. Insbesondere ändert sich durch ein derartiges Heranbewegen von Fingern, einer Hand oder einem andersartigen Gegenstand an der Bildschirmebene 112 die Lichtsituation auch im Hinblick auf das von der Bildschirmebene 112 remittierte Infrarotlicht. Diese veränderte Lichtsituation kann von der Auswerteeinrichtung 124 in dem von der Kamera 120 aufgenommenen Kamerabild durch entsprechende Filter- und Subtraktionsmethoden ermittelt werden. Dabei kann auch das von dem Projektor 116 auf die Bildschirmebene 112 ausgestrahlte Bild in der Form berücksichtigt, dass es von dem von der Kamera 120 aufgenommenen Kamerabild subtrahiert wird.

Aus den von der Auswerteeinrichtung 124 erkannten Blobs werden dann Signale erzeugt und an die Rechneranlage 122 weitergegeben, welche Steuerfunktionen innerhalb der Rechneranlage 122 auslösen können. So kann beispielsweise anhand der Blobs eine Bewegung von auf der Bildschirmebene 112 dargestellten Elementen ausgelöst werden. Alternativ oder zusätzlich kann der Benutzer 114 durch Erzeugung von Blobs eine Auswahl an Elementen oder Funktionen vornehmen, Werte eingeben, eine simulierte Tastatur bedienen oder eine simulierte Spielekonsole bedienen.

In Fig. 5 ist eine Ausführungsvariante eines Multitouch-Bildschirms 110 dargestellt, bei dem die zugehörige Bildschirmebene 112 nicht senkrecht bzw. vertikal sondern weitgehend geneigt in die Horizontale angeordnet ist. Ein derartiger Multitouch-Bildschirm 110 gemäß Fig. 5 wird auch als Tisch-Bildschirm bezeichnet. Im Übrigen ist der Multitouch-Bildschirm 110 gemäß Fig. 5 im Hinblick auf die Anordnung eines Projektors 116, einer Infrarotbeleuchtung 118, einer Kamera 110, einer Rechneranlage 122 sowie einer Auswerteeinrichtung 124 wie die in Fig. 4 dargestellte Ausführungsvariante gestaltet.

Fig. 6 veranschaulicht die bei einem Multitouch-Bildschirm 110 gemäß Fig. 4 und 5 verwendete Bildschirmebene 112 im Detail. Die Bildschirmebene 112 ist aus einem gespannten Flächenmaterial 126 gebildet, welches in einem (weiter nicht dargestellten) Rahmen gespannt ist. Das gespannte Flächenmaterial 126 ist aus einem monofilen Netz bzw. Gewebe gebildet, dessen Fäden einen Durchmesser von 40 µm aufweisen und in einer Anzahl von 120 Fäden pro Zentimeter angeordnet sind. Die Fäden sind aus PET (Polyethylen) hergestellt.

Auf der dem Benutzer 114 zugewandten Seite der Bildschirmebene 112 ist das gespannte Flächenmaterial 126 mit einer Emulsion 128 mittels eines Sprühverfahrens in mehreren Schichten aufgebracht. Die damit erzeugte Gesamtschichtdicke beträgt 100 µm bis 150 µm. Die Emulsion 128 ist aus einem Anteil eines Transparentlacks und einem Anteil an transparenten Kunststoff-Kügelchen gebildet, welche eine mittlere Partikelgröße von 6 µm bis 15 µm aufweisen. Die Kunststoff-Kügelchen sind aus PMMA (Polymethylmethacrylat) hergestellt. Sie bilden einen Gewichtsanteil von ca. 44 % innerhalb der Emulsion 128. Ferner ist der Emulsion ein Anteil an Kontrastpartikeln, insbesondere Flammruß, mit einem Gewichtsprozentanteil von ca. 0,25 % beigemengt.

Mit der Emulsion 128 ist die Vorderseite der Bildschirmebene 112 derart gestaltet, dass diese einen Leuchtdichtefaktor von 0,7 bis 1,5 aufweist.

Bei einer (im Übrigen nicht näher veranschaulichten) Ausführungsvariante der in Fig. 6 veranschaulichten Bildschirmebene 112 ist diese nicht mit einem gewebeförmigen, gespannten Flächenmaterial sondern mit einem gespannten Folienmaterial oder einer sehr dünnen Platte gestaltet, auf die aber dennoch eine Emulsion 128 schichtförmig aufgebracht ist.

Mit der derart gestalteten Bildschirmebene 112 und insbesondere der darauf aufgebrachten Emulsion 128 ist es möglich, die von einem Benutzer 114 am zugehörigen Multitouch-Bildschirm 110 erzeugten Blobs prozesssicher zu erkennen. Insbesondere kann dabei die genaue Form und Intensität derartiger Blobs gut ermittelt werden. Ferner kann auf Grund einer bei der Blob-Erzeugung sich ergebenden leichten Auslenkung des gespannten Flächenmaterials 126 die Intensität der vom Benutzer 114 erzeugten Blobs deutlich ermittelt werden.

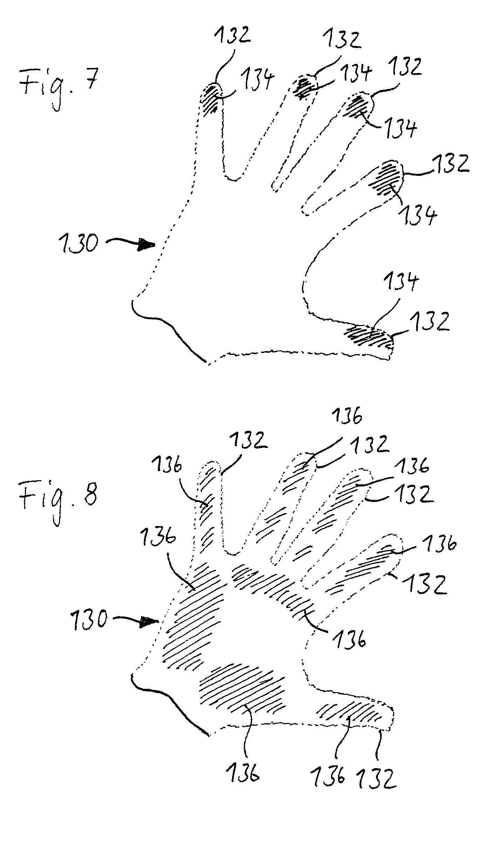

Fig. 7 zeigt dazu ein erstes Auswertungsbild einer an der Bildschirmebene 112 angelegten Hand 130. Die Hand 130 berührt mit Fingern 132 jeweils an deren Spitze die Bildschirmebene 112 und erzeugt dadurch insgesamt fünf Blobs 134, die auf Grund ihrer Form und des sich an ihnen jeweils ergebenden Lichtintensitätsunterschieds von der Auswerteeinrichtung 124 mittels geeigneter Auswertealgorithmen den einzelnen Fingern 132 der Hand 130 zugeordnet werden können. Auf diese Weise ist es möglich, dass jedem einzelnen Finger 132 der Hand 130 eine gesonderte Steuerfunktion mittels eines mit dem jeweiligen Finger 132 erzeugten Blobs 134 zugeordnet werden kann. So kann beispielsweise mit einem derartigen (punktuellen) Blob 134 eine einzelne Steuerfunktion ausgelöst werden.

In Fig. 8 ist ein zweites Ausführungsbeispiel von mittels einer Hand 130 erzeugten Blobs 136 veranschaulicht, wobei die einzelnen Blobs 136 jeweils auf Grund einer großflächigen Anlage der zugehörigen Hand 130 an der Bildschirmebene 112 erzeugt sind. Die Blobs 136 sind dabei entsprechend im Verhältnis zu den Blobs 134 gemäß Fig. 7 großflächiger und es kann mit der Auswerteeinrichtung 124 eine entsprechende Funktion abgeleitet werden, mittels der beispielsweise ein auf die Bildschirmebene 112 projiziertes Element, etwa ein Foto, als ganzes verschoben wird.

Die erfindungsgemäße Emulsion streut ferner Infrarotlicht gut. Durch die beschriebenen Emulsions-Mischungen und zugehörige Beschichtungsverfahren kann gerade für Multitouch-Applikationen eine ideale Oberfläche geschaffen werden. Dies gilt sowohl für Projektionsbildschirm-Flächen als auch für Diffusor-Oberflächen für LCD- und OLED-Bildschirme. Die erfindungsgemäßen Oberflächen sind sehr matt, wodurch nicht gewünschte Reflektionen vermieden werden, wenn Kameras an der Rückseite der Bildschirmebene eine Infrarotlichtstreuung aufnehmen. Die erfindungsgemäßen Emulsions-Schichten können vorteilhaft auch generell als Diffusor für LCD-Systeme eingesetzt werden, da sie eine hohe Lichttransmission aufweisen, dünn, leicht und gut verarbeitbar sind und zugleich ein gutes Lichtspektrum aufweisen. Die Emulsions-Schichten werden daher besonders bevorzugt auch als Diffusor zwischen einem LCD-Panel und einer dahinter angeordneten Beleuchtungseinheit (backlight unit) eingesetzt.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Projektionsbildschirm
- 12: Benutzer
- 14: Projektor
- 16: Projektionsbildschirm-Fläche
- 18: Projektionsbildschirm-Emulsion
- 20: Bereitstellen
- 22: Entfetten und Reinigen
- 24: Aufsprühen
- 110: Multitouch-Bildschirm
- 112: Bildschirmebene
- 114: Benutzer
- 116: Projektor
- 118: Infrarotbeleuchtung
- 120: Kamera
- 122: Rechneranlage
- 124: Auswerteeinrichtung
- 126: gespanntes Flächenmaterial
- 128: Emulsion
- 130: Hand
- 132: Finger
- 134: Blob
- 136: Blob

## Patentansprüche

1. Bildschirm-Emulsion (18) zum Aufbringen an einer Bildschirm-Fläche (16), insbesondere einer Projektionsbildschirm-Fläche, mit einem Anteil an Transparentlack und einem Anteil an transparenten Kunststoff-Kügelchen.

2. Bildschirm-Emulsion nach Anspruch 1, bei der der Transparentlack mit einem Einkomponentenlack hergestellt ist.

3. Bildschirm-Emulsion nach Anspruch 1, bei der der Transparentlack mit einem Zweikomponentenlack hergestellt ist.

4. Bildschirm-Emulsion nach einem der Ansprüche 1 bis 3, bei der der Transparentlack auf Wasserbasis hergestellt ist.

5. Bildschirm-Emulsion nach einem der Ansprüche 1 bis 4, bei der die Kunststoff-Kügelchen eine mittlere Partikelgröße von 6 bis 15 Mikrometer aufweisen.

6. Bildschirm-Emulsion nach einem der Ansprüche 1 bis 5, bei der die Kunststoff-Kügelchen aus PMMA hergestellt sind.

7. Bildschirm-Emulsion nach einem der Ansprüche 1 bis 6, bei der die Kunststoff-Kügelchen einen Gewichtsprozentanteil von 15 % bis 55 %, insbesondere 38 % bis 48 % der Bildschirm-Emulsion ausmachen.

8. Bildschirm-Emulsion nach einem der Ansprüche 1 bis 7, bei der Kontrastpartikel, insbesondere Flammruß mit einem Gewichtsprozentanteil von bis zu 5 %, insbesondere 0,05 % bis 0,5 % beigemengt sind.

9. Projektionsbildschirm (10) mit einer Bildschirm-Emulsion (18) nach einem der Ansprüche 1 bis 8.

10. Verfahren zum Aufbringen einer Bildschirm-Emulsion (18), insbesondere einer Projektionsbildschirm-Emulsion, auf einer Bildschirm-Fläche (16), insbesondere einer Projektionsbildschirm-Fläche, bei dem die Bildschirm-Emulsion (18) als mindestens eine Schicht auf die Bildschirm-Fläche (16) im Sprühverfahren aufgebracht wird.

11. Verfahren nach Anspruch 9, bei dem die Bildschirm-Emulsion (18) im Rauteverfahren aufgebracht wird.

12. Verfahren zum Aufbringen einer Bildschirm-Emulsion (18), insbesondere einer Projektionsbildschirm-Emulsion, auf einer Bildschirm-Fläche (16), insbesondere einer Projektionsbildschirm-Fläche, bei dem die Bildschirm-Emulsion (18) als eine Schicht auf der Bildschirm-Fläche (16) im Siebdruckverfahren aufgebracht wird.

13. Verfahren nach einem der Ansprüche 10 bis 12. bei dem die Schicht mit einem Leuchtdichtefaktor von 0,5 bis 5,0 ausgebildet wird.

14. Verfahren nach einem der Ansprüche 10 bis 13, bei dem die Bildschirm-Emulsion (18) mittels eines Transparentlacks auf Wasserbasis hergestellt und vor dem Aufbringen der Schicht der Bildschirm-Emulsion (18) zusätzlich Wasser zugefügt wird.

15. Verfahren nach einem der Ansprüche 10 bis 14, bei dem die Bildschirm-Fläche (16) vor dem Aufbringen der Schicht der Bildschirm-Emulsion (18) entfettet wird.

16. Verwendung einer Emulsion (18) nach einem der Ansprüche 1 bis 8 zum Ausbilden einer Beschichtung an einer Bildschirm-Fläche (16), insbesondere einer Projektionsbildschirm-Fläche, eines Bildschirm (10), insbesondere eines Projektionsbildschirms.

17. Multitouch-Bildschirm mit einer Bildschirmebene (112), an der ein Benutzer (114) des Multitouch-Bildschirms (110) durch Berühren der Bildschirmebene (112) Blobs erzeugen kann, die von einer Auswerteeinrichtung (124) erkannt und ausgewertet werden können, **dadurch gekennzeichnet, dass** die Bildschirmebene (112) mit einer Emulsion (128) beschichtet ist.
